# EUROPEAN PATENT APPLICATION

(11) **EP 4 284 006 A1**
(43) Date of publication of application: **29.11.2023**
(21) Application number: 21920818.8
(22) Date of filing: 16.12.2021
(51) Int. Cl.: H04N 21/4415, G06F 16/33

(54) **ABNORMAL STATE PROCESSING METHOD, SERVER, AND ELECTRONIC DEVICE**

(30) Priority: 22.01.2021 CN 202110090645
(71) Applicant: ZTE Corporation, Shenzhen, Guangdong 518057 (CN)
(72) Inventor: ZHANG, Meng, Shenzhen, Guangdong 518057 (CN)
(74) Representative: Gevers Patents
(86) International application number: PCT/CN2021/138785
(87) International publication number: WO 2022/156444

(57) **Abstract**

A method for processing an abnormal state, a server and an electronic device are disclosed in embodiments of the present disclosure. The method in an embodiment of the present disclosure includes: receiving a query request sent by an electronic device; sending verification information to a corresponding terminal device according to the query request; receiving response information in response to the verification information; and generating corresponding first feedback information according to the response information, and sending the first feedback information to the electronic device, such that the electronic device performs a corresponding abnormity handling operation according to the first feedback information.

## Description

### Cross-reference of related applications

The present application claims the priority of the Chinese patent application CN202110090645.9 filed on January 22, 2021 and entitled "abnormal state processing method, server and electronic device", the entirety of which is incorporated herein by reference.

### Field of Technology

The present disclosure relates to the technical field of communications, and in particular, to a method for processing an abnormal state, a server and an electronic device.

### Background

With the development of technology, an electronic device has become an indispensable part in people's life. During selling the electronic device, cross-boundary selling may occur, which will not only lead to huge economic losses to enterprises, but also interfere with normal market promotion strategies and marketing policies of an enterprise.

A set-top box is taken as an example, which is an electronic device for providing television content to a user by a TV as a display device based on a home broadband network and further for providing a variety of interactive applications, such as multi-screen interactive experiences, visual communications and games.

However, due to selling in different regions, a price, configuration, and services provided by the same set-top box may be different in different regions. In order to prevent cross-boundary selling of the set-top box in the different regions, an anti-cross-boundary selling code is generally provided in a storage of the set-top box, and then is detected and determined by a server whether cross-boundary selling occurs. However, after the cross-boundary selling of the set-top box is detected, off-line maintenance needs to be performed on the set-top box under cross-boundary selling, resulting in waste in maintenance resources.

### Summary

The main objective of the embodiments of the present disclosure is to provide a method for processing an abnormal state, a server and an electronic device.

In a first aspect, a method for processing an abnormal state is provided in an embodiment of the present disclosure, and the method includes: receiving a query request sent by an electronic device, the query request being an information request sent to a server in a case where the electronic device is in an abnormal state; sending verification information to a corresponding terminal device according to the query request; receiving response information of the electronic device responding to the verification information; and generating corresponding first feedback information according to the response information, and sending the first feedback information to the electronic device, such that the electronic device performs a corresponding abnormity handling operation according to the first feedback information, the first feedback information being used for representing whether the electronic device is released from the abnormal state.

In a second aspect, a method for processing an abnormal state is provided, and the method includes: sending a query request to a server in a case where the electronic device is in an abnormal state, such that the server, in response to the query request, acquires user information bound to the electronic device, so as to send verification information to a corresponding terminal device according to the user information; sending response information to the server, such that the server generates corresponding first feedback information according to the response information, the response information being information sent to the server by a user manipulating the electronic device in response to the verification information, and the first feedback information being used for representing whether the electronic device is released from the abnormal state; and receiving the first feedback information, and performing a corresponding abnormity handling operation according to the first feedback information.

In a third aspect, a server is further provided in an embodiment of the present disclosure, and includes: a memory and a processor. The memory is configured to store a computer executable program, and the processor is configured to execute the computer executable program for processing an abnormal state to implement the method for processing an abnormal state provided in the description of the present disclosure.

In a fourth aspect, an electronic device is further provided in an embodiment of the present disclosure, and includes: a memory and a processor. The memory is configured to store a computer executable program, and the processor is configured to execute the computer executable program for processing an abnormal state to implement the method for processing an abnormal state provided in the description of the present disclosure.

### Brief Description of the Drawings

To explain the technical solutions of the embodiments of the present disclosure more clearly, accompanying drawings for describing the embodiments will be briefly described below. Apparently, the accompanying drawings in the following description illustrate some embodiments of the present disclosure, and those of ordinary skill in the art may still derive other accompanying drawings from these accompanying drawings without creative effort.
FIG. 1 is a schematic flow diagram of a method for processing an abnormal state in an embodiment of the present disclosure;
FIG. 2 is a schematic flow diagram of a method for processing an abnormal state in another embodiment of the present disclosure;
FIG. 3 is a schematic flow diagram of a method for processing an abnormal state in yet another embodiment of the present disclosure;
FIG. 4 is a schematic flow diagram of a method for processing an abnormal state in still another embodiment of the present disclosure;
FIG. 5 is a schematic structural block diagram of a server in an embodiment of the present disclosure; and
FIG. 6 is a schematic structural block diagram of an electronic device in an embodiment of the present disclosure.

### Detailed Description of the Embodiments

Technical solutions in the embodiments of the present disclosure will be clearly and completely described below in conjunction with accompanying drawings in the embodiments of the present disclosure. Apparently, the described embodiments are merely part, but not all, of the embodiments of the present disclosure. Based on the accompanying drawings in the present disclosure, all other accompanying drawings obtained by those of ordinary skill in the art without creative effort shall fall within the scope of protection of the present disclosure.

The flows shown in the accompanying drawings are illustrative only and are not necessarily inclusive of all contents and operations/steps, nor are they necessarily executed in the order described. For example, some operations/steps may also be broken down, combined or partially merged, so that an actual order of execution may change depending on an actual situation.

It is to be understood that, terms used in the description of the present disclosure are merely for the purpose of describing specific embodiments and are not intended to limit the present disclosure. As used in the description of the present disclosure and the appended claims, singular forms of "a/an", "one" and "the" are intended to include plural forms, unless the context clearly indicates otherwise.

Some embodiments of the present disclosure are illustrated in detail below in conjunction with the accompanying drawings. The following embodiments and features in the embodiments may be combined with each other without conflicts.

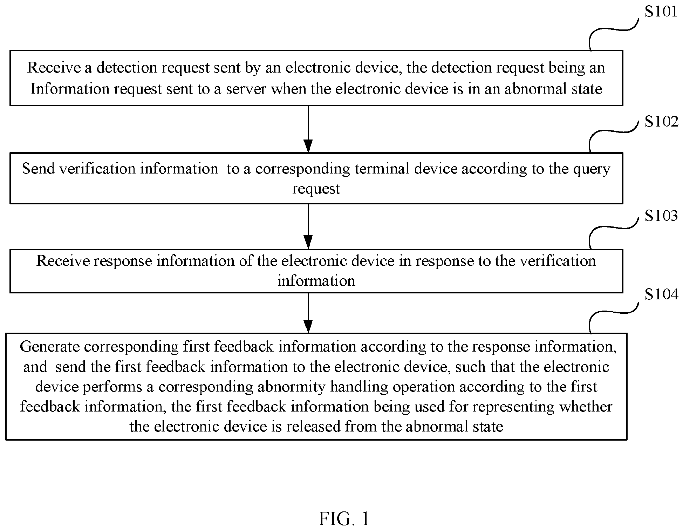

Referring to FIG. 1, FIG. 1 is a schematic flow diagram of a method for processing an abnormal state provided in an embodiment of the present disclosure.

The method for processing an abnormal state provided in the embodiment is applied to a server. The server may be a single server, and alternatively may be a server cluster composed of a plurality of servers, which is not limited herein.

As shown in FIG. 1, the method for processing an abnormal state includes steps S101 to S104.

At step S101, a query request sent by an electronic device is received. The query request is an information request sent to a server when the electronic device is in an abnormal state.

The abnormal state refers to a state in which a function of the electronic device is limited. When the electronic device is in the abnormal state, a preset function of the electronic device may be used only by a user. For example, the abnormal state is a locking state. When the electronic device is in the locking state, the electronic device may only be manipulated by the user to enter a preset control interface, or only a preset function button of the electronic device may be operated.

In the present disclosure, the electronic device includes, but is not limited to, a set-top box. The following embodiments are described in detail by taking the electronic device, e.g., a set-top box, as an example.

As an example, when the set-top box detects that the set-top box itself is in the abnormal state, the set-top box actively enters into a preset abnormal state mode, and displays an interface corresponding to the abnormal state, such as a locking state interface. When the set-top box is in the abnormal state, if the abnormal state is expected to be eliminated, verification needs to be performed. That is, the set-top box needs to send the query request to a corresponding server to acquire corresponding verification information from the server, and the abnormal state of the set-top box is eliminated according to the verification information.

The query request may be automatically sent by the set-top box to the server after the set-top box enters into the abnormal state, and may alternatively be sent to the server by the user manipulating the set-top box, which is not limited herein. For example, the set-top box may display the locking state interface on a display device connected thereto; and the user issues a corresponding instruction through a corresponding button on the locking state interface, such that the set-top box may send the query request to the server.

At step S102, verification information is sent to a corresponding terminal device according to the query request.

The server acquires user information bound to the set-top box according to the query request sent by the set-top box, and then sends the verification information to the terminal device corresponding to the user information. A corresponding table between identity information of the set-top box and the user information is saved in the server, the identity information of a corresponding set-top box may be acquired according to the query request, and thus corresponding user information may be acquired according to the identity information of the set-top box. The user information includes user contact information, such as a phone number, and email information.

In some embodiments, sending the verification information to the corresponding terminal device according to the query request includes: acquiring identity information of the electronic device according to the query request; acquiring user information corresponding to the identity information according to the identity information; and sending the verification information to the corresponding terminal device according to the user information.

For example, acquiring by the server the identity information of the set-top box according to the received query request may include: parsing by the server the query request including the identity information of the set-top box, sent by the set-top box, to obtain the identity information corresponding to the set-top box. The acquiring by the server the identity information of the set-top box according to the received query request may alternatively include: after receiving the query request, sending by the server an identity information reporting instruction to the set-top box, such that the set-top box sends the identity information to the server according to the identity information reporting instruction.

The identity information includes, but is not limited to, ID of the set-top box, an MAC address, a market code, operator information, and combination thereof.

After acquiring the identity information of the set-top box, the server acquires the user information corresponding to the identity information according to the identity information. After acquiring the user information, the server sends the verification information to the corresponding terminal device according to the user information, so as to release the set-top box from the abnormal state based on the verification information.

Terminal device includes, but is not limited to, a mobile terminal such as a mobile phone or a notebook computer, and a non-mobile terminal such as a desktop computer.

At step S103, response information of the electronic device in response to the verification information is received.

After the server sends the verification information to the corresponding terminal device according to the user information, if the set-top box needs to be released from the abnormal state, the set-top box needs to be manipulated by the user to send the response information responding to the received verification information to the server according to the verification information.

For example, sending by the user the response information to the set-top box in response to the verification information received by the terminal device may include: directly inputting by the user the response information into the set-top box, such that the set-top box obtains the response information. For example, sending by the user the response information to the set-top box in response to the verification information received by the terminal device may alternatively include: sending the response information to the set-top box by the user manipulating an external device connected to the set-top box. The external device includes, but is not limited to, a remote control, a television set, or the like, which is in communication connection with the set-top box.

For example, the set-top box is connected to the television set and the remote control, and a control instruction is sent to the set-top box through the remote control. A preset locking state interface under the abnormal state of the set-top box and an execution result of the control instruction sent from the remote control to the set-top box are displayed on a display screen of the television set. The locking state interface is configured to remind the user to input the response information at a preset position of a page. The verification information sent by the server includes verification prompt information and a verification character string. The verification prompt information is used for informing how to manipulate the set-top box to perform verification of relevant information. The verification character string is a verification character string which is randomly generated by the server according to a preset algorithm. After the terminal device of the user receives the verification information sent by the server, the user extracts the verification character string from the verification information according to the verification prompt information, and manipulates the remote control according to the verification prompt information to input a corresponding response character string at the preset position of the locking state interface, such that the set-top box generates the corresponding response information according to the response character string, and sends the response information to the server.

At step S104, corresponding first feedback information is generated according to the response information, and is sent to the electronic device, such that the electronic device performs a corresponding abnormity handling operation according to the first feedback information. The first feedback information is used for representing whether the electronic device is released from the abnormal state.

After the server receives the response information, whether the response information is matched with the verification information sent to the corresponding terminal device is determined, and the corresponding first feedback information is generated according to a determination result and is sent to the corresponding set-top box.

For example, the server parses the received response information to obtain the corresponding response character string, and queries a sending record of the verification information to obtain the verification information sent to the corresponding terminal device of the corresponding set-top box. The server determines whether the verification character string of the verification information is matched with the response character string. For example, by determining whether the verification character string is consistent with the response character string, whether there is an abnormity in the set-top box is determined, and the corresponding first feedback information is generated according to a determination result. The server sends the first feedback information to the set-top box, such that the set-top box performs a corresponding processing on the abnormal state of the set-top box according to the received first feedback information.

In some embodiments, the first feedback information includes abnormity feedback information, the abnormity feedback information is feedback information generated when the server determines existence of an abnormity in the response information. Sending the first feedback information to the electronic device such that the electronic device performs the corresponding abnormity handling operation according to the first feedback information includes: sending the abnormity feedback information to the electronic device, such that the electronic device is controlled to maintain the abnormal state according to the abnormity feedback information.

When the server determines that the response information is not matched with the verification information sent to the corresponding terminal device, it indicates that there is an abnormity in the set-top box, and the server sends the abnormity feedback information to the set-top box, such that the set-top box is controlled to continue maintaining the abnormal state according to the received abnormity feedback information.

For example, when the server determines that the response character string is not matched with the verification character string, it indicates that a current user using the set-top box is different from a user corresponding to the user information when the set-top box is registering and logining in, and then the set-top box is determined to be abnormal at present. The server generates the corresponding abnormity feedback information according to the determination result, and sends the abnormity feedback information to the set-top box. After receiving the abnormity feedback information, the set-top box displays corresponding prompt information on the display screen of the television set connected to the set-top box, to remind the user of a validation failure, and the set-top box continues maintaining the abnormal state.

In some embodiments, the first feedback information includes non-abnormity feedback information, the non-abnormity feedback information is feedback information generated when the server determines that there is no abnormity in the response information. Sending the first feedback information to the electronic device such that the electronic device performs the corresponding abnormity handling operation according to the first feedback information includes: sending the non-abnormity feedback information to the electronic device, such that the electronic device is controlled to be released from the abnormal state according to the non-abnormity feedback information.

When the server determines the response information is matched with the verification information sent to the corresponding terminal device, it indicates that there is no abnormity in the set-top box at present, and the server sends the non-abnormity feedback information to the set-top box, such that the set-top box is controlled to be released from the abnormal state according to the received non-abnormity feedback information.

For example, when the server determines the response character string is matched with the verification character string, it indicates that the current user using the set-top box is the user corresponding to the user information when the set-top box is registering and logining in, and then it determines that there is no abnormity in the set-top box at present. The server generates the corresponding non-abnormity feedback information according to the determination result, and sends the non-abnormity feedback information to the set-top box. After receiving the non-abnormity feedback information, the set-top box displays corresponding prompt information on the display screen of the television set connected to the set-top box to remind the user of a validation success, and the set-top box is released from the abnormal state, such that the set-top box can be normally used by the user.

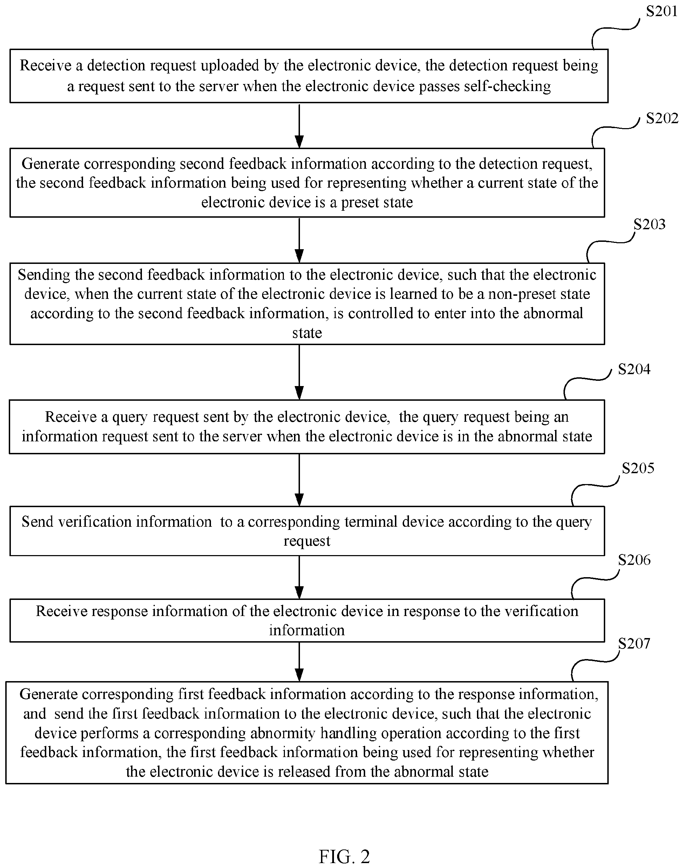

Referring to FIG. 2, in some embodiments, the method for processing an abnormal state includes steps S201 to S207.

At step S201, a detection request uploaded by the electronic device is received. The detection request is a request sent to the server when the electronic device passes self-checking.

The detection request received by the server is a detection request generated after the electronic device passes self-checking. The set-top box implements the self- checking by detecting whether there is an abnormity in its own identity information. When there is no abnormity detected in own identity, the self-checking is passed, and then the set-top box sends the detection request to the server, such that the server further detects the set-top box.

For example, an encrypted detection code is burned in a storage area of the set-top box during producing and manufacturing the set-top box, and the encrypted detection code is encrypted identity information of the set-top box. A corresponding detection code is acquired by decrypting the encrypted detection code. A preset detection code is further stored in the storage area of the set-top box, and the preset detection code is unencrypted identity information of the set-top box. The identity information includes, but is not limited to, ID of the set-top box, an MAC address, a market code, an operator, and combination thereof. By determining whether the detection code is matched with the preset detection code, whether the set-top box passes the self-checking is determined. For example, when the detection code is determined to be not matched with the preset detection code, it indicates that the information of the set-top box is falsified, or the set-top box is illegally modified, and then the set-top box does not pass the self-checking. When the detection code is determined to be matched with the preset detection code, the set-top box passes the self-checking.

After the self-checking is passed, the set-top box sends a corresponding detection request generated according to the detection code to the server, and the server further detects the set-top box according to the detection request to detect whether cross-boundary selling occurs in the set-top box.

At step S202, corresponding second feedback information is generated according to the detection request. The second feedback information is used for representing whether a current state of the electronic device is a preset state.

The server detects whether the current state of the corresponding set-top box is the preset state according to the detection request, and the preset state includes, but is not limited, a non-cross-boundary selling state. The server generates the corresponding second feedback information according to a detection result of the current state of the set-top box.

In some embodiments, generating the corresponding second feedback information according to the detection request includes: acquiring a detection code corresponding to the detection request according to the detection request; and determining whether the detection code is matched with a detection code in known detection codes in a detection code database, and generating the corresponding second feedback information according to a determination result.

The server acquires the detection code of the corresponding set-top box according to the detection request, and the detection request may include the detection code of the set-top box. The server obtains the detection code of the corresponding set-top box by parsing the detection request; or the server, in response to the detection request, may send a detection code reporting instruction to the set-top box, such that the set-top box sends the corresponding detection code to the server according to the detection code reporting instruction.

The detection code includes, but is not limited to, ID of the set-top box, an MAC address, a market code, operator information, and the combination thereof.

After obtaining the detection code, the server detects whether the current state of the set-top box is the preset state according to the detection code, and generates the corresponding second feedback information. The server has the detection code database for storing the known detection codes of all the currently runnable set-top boxes. After obtaining the detection code of the set-top box to be detected, the server queries whether there is a detection code in the known detection codes in the detection code database consistent with the detection code of the set-top box to be detected, and the server generates the corresponding second feedback information according to a query result.

At step S203, the second feedback information is sent to the electronic device, such that the electronic device, when the current state of the electronic device is learned to be a non-preset state according to the second feedback information, is controlled to enter into the abnormal state.

The server sends the second feedback information to the set-top box; and the set-top box parses the received second feedback information to learn that the current state of the set-top box is the non-preset state. For example, if the current state of the set-top box is the cross-boundary selling state, the set-top box enters into the abnormal state.

For example, if there is a detection code in the known detection codes in the detection code database of the server is consistent with the detection code of the set-top box to be detected, the current state of the set-top box to be detected is the cross-boundary selling state, that is, the set-top box to be detected is in the non-preset state. Then, the server generates the corresponding second feedback information representing that the current state of the set-top box is the non-preset state, and sends the second feedback information to the set-top box, such that the set-top box is controlled to enter into the abnormal state according to the second feedback information.

At step S204, a query request sent by the electronic device is received, and the query request is an information request sent to the server when the electronic device is in the abnormal state.

Step S204 is the same as step S101 in FIG. 1, which is not described in detail herein.

At step S205, verification information is sent to a corresponding terminal device according to the query request.

Step S205 is the same as step S102 in FIG. 1, which is not described in detail herein.

At step S206, response information of the electronic device responding to the verification information is received.

Step S206 is the same as step S103 in FIG. 1, which is not described in detail herein.

At step S207, corresponding first feedback information is generated according to the response information, and is sent to the electronic device, such that the electronic device performs a corresponding abnormity handling operation according to the first feedback information. The first feedback information is used for representing whether the electronic device is released from the abnormal state.

Step S207 is the same as step S104 in FIG. 1, which is not described in detail herein.

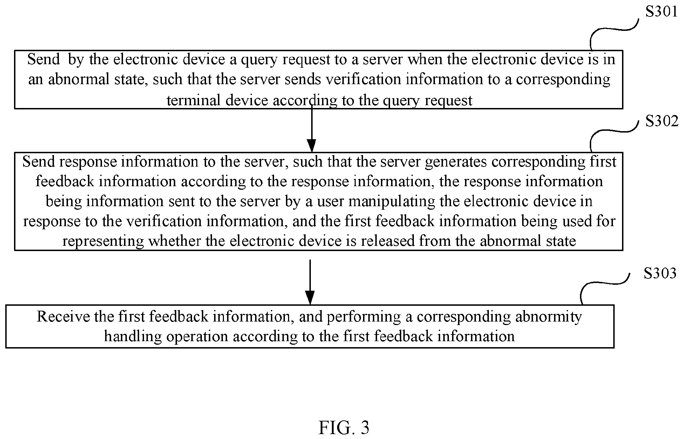

Referring to FIG. 3, a method for processing an abnormal state is further provided in the embodiment, which is applied to an electronic device. The method for processing an abnormal state includes steps S301 to S303.

As shown in FIG. 3, the method for processing an abnormal state includes steps S301 to S303.

At step S301, a query request is sent by the electronic device to a server when the electronic device is in an abnormal state, such that the server, in response to the query request, acquires user information bound to the electronic device, so as to send verification information to a corresponding terminal device according to the user information.

The abnormal state refers to a state in which a function of the electronic device is limited. When the electronic device is in the abnormal state, a user may only use a preset function of the electronic device. For example, the abnormal state is a locking state. When the electronic device is in the locking state, the electronic device may only be manipulated by the user to enter a preset control interface, or may only be operated by the user via a preset function button of the electronic device.

As an example, when the set-top box detects that the set-top box itself is in the abnormal state, the set-top box actively enters into a preset abnormal state mode, and displays an interface corresponding to the abnormal state, such as a locking state interface. When the set-top box is in the abnormal state, if the abnormal state is expected to be eliminated, verification needs to be performed. That is, the set-top box needs to send the query request to the corresponding server to acquire corresponding verification information from the server, thereby eliminating the abnormal state of the set-top box according to the verification information.

The query request may be automatically sent to the server after the set-top box enters into the abnormal state, and may alternatively be sent to the server by the user manipulating the set-top box, which is not limited herein. For example, the set-top box may display the locking state interface on a display device connected thereto, and the user issues a corresponding instruction through a corresponding button on the locking state interface, such that the set-top box sends the query request to the server.

The server acquires the user information bound to the set-top box according to the query request sent by the set-top box, and then sends the verification information to the terminal device corresponding to the user information. A corresponding table between the identity information of the set-top box and the user information is saved in the server, and the identity information of the corresponding set-top box may be acquired according to the query request, and thus the corresponding user information may be acquired according to the identity information of the set-top box. The user information includes user contact information, such as phone numbers, email information, and the like.

For example, acquiring by the server the identity information of the set-top box according to the received query request may include: parsing, by the server, the query request including the identity information of the set-top box, sent by the set-top box, to obtain the identity information corresponding to the set-top box. The acquiring by the server the identity information of the set-top box according to the received query request may alternatively include: after the server receives the query request, sending by the server an identity information reporting instruction to the set-top box, such that the set-top box sends the identity information to the server according to the identity information reporting instruction.

The identity information includes, but is not limited to, ID of the set-top box, an MAC address, a market code, operator information, and the combination thereof.

After acquiring the identity information of the set-top box, the server acquires the user information corresponding to the identity information according to the identity information. After acquiring the user information, the server sends the verification information to the corresponding terminal device according to the user information, to release the set-top box from the abnormal state based on the verification information.

Terminal device includes, but is not limited to, a mobile terminal, such as a mobile phone, a notebook computer and the like, or a non-mobile terminal such as a desktop computer.

At step S302, response information is sent to the server, such that the server generates corresponding first feedback information according to the response information. The response information is information sent to the server by a user manipulating the electronic device in response to the verification information, and the first feedback information is used for representing whether the electronic device is released from the abnormal state.

After the server sends the verification information to the corresponding terminal device according to the user information, if the set-top box needs to be released from the abnormal state, the set-top box needs to be manipulated by the user to send the response information responding to the received verification information to the server according to the verification information.

For example, sending by the user the response information to the set-top box in response to the verification information received by the terminal device may include: directly inputting by the user the response information into the set-top box, such that the set-top box obtains the response information. For example, the sending the response information to the set-top box in response to the verification information received by the terminal device may alternatively include: sending the response information to the set-top box by the user manipulating an external device connected to the set-top box. The external device includes, but is not limited to, a remote control, a television set, and the like, which is in communication connection with the set-top box.

For example, the set-top box is connected to the television set and the remote control, and a control instruction is sent to the set-top box through the remote control. The preset locking state interface under the abnormal state of the set-top box and an execution result of the control instruction sent from the remote control to the set-top box are displayed on a display screen of the television set. The locking state interface is configured to remind the user to input the response information at a preset position of a page. The verification information sent by the server includes verification prompt information and a verification character string. The verification prompt information is used for informing how to manipulate the set-top box to perform verification of relevant information. The verification character string is a verification character string randomly generated by the server according to a preset algorithm. After the terminal device of the user receives the verification information sent by the server, the user extracts the verification character string from the verification information according to the verification prompt information, and manipulates the remote control according to the verification prompt information to input a corresponding response character string at the preset position of the locking state interface, such that the set-top box generates the corresponding response information according to the response character string, and sends the response information to the server.

After the server receives the response information, whether the response information is matched with the verification information sent to the corresponding terminal device is determined, the corresponding first feedback information is generated according to a determination result, and the first feedback information is sent to the corresponding set-top box.

For example, the server parses the received response information to obtain the corresponding response character string, and queries a sending record of the verification information to obtain the verification information sent to the corresponding terminal device of the corresponding set-top box. The server determines whether the verification character string of the verification information is matched with the response character string. For example, by determining whether the verification character string is consistent with the response character string, whether there is an abnormity in the set-top box is determined, and the corresponding first feedback information is generated according to a determination result and sent to the set-top box.

At step S303, the first feedback information is received, and a corresponding abnormity handling operation is performed according to the first feedback information.

The set-top box receives the first feedback information. The first feedback information is used for representing whether the response information uploaded by the set-top box is matched with the verification information sent from the server to the corresponding terminal device, thereby representing whether the current state of the set-top box is abnormal. The set-top box performs the corresponding abnormity handling operation according to the received first feedback information.

In some embodiments, the first feedback information includes abnormity feedback information generated when the server determines that there is an abnormity in the response information. The receiving the first feedback information and performing a corresponding abnormity handling operation according to the first feedback information include: receiving the abnormity feedback information; and controlling the electronic device to maintain the abnormal state according to the abnormity feedback information.

The set-top box receives the abnormity feedback information sent by the server. The abnormity feedback information is information sent to the set-top box when the server determines that the response information is not matched with the verification information sent to the corresponding terminal device, and indicates that there is an abnormity in the current set-top box. The set-top box is controlled to continue maintaining the abnormal state according to the received abnormity feedback information.

For example, when the server determines that the response character string is not matched with the verification character string, it indicates that a current user using the set-top box is different from a user corresponding to the user information when the set-top box is registering and logining in, and then the set-top box is determined to be abnormal at present. The server generates the corresponding abnormity feedback information according to the determination result, and sends the abnormity feedback information to the set-top box. After receiving the abnormity feedback information, the set-top box displays corresponding prompt information on the display screen of the television set connected to the set-top box, to remind the user of a validation failure, and the set-top box continues maintaining the abnormal state.

In some embodiments, the first feedback information includes non-abnormity feedback information, and the non-abnormity feedback information is feedback information generated when the server determines that there is no abnormity in the response information The receiving the first feedback information and performing a corresponding abnormity handling operation according to the first feedback information includes: receiving the non-abnormity feedback information; and controlling the electronic device to be released from the abnormal state according to the non-abnormity feedback information.

The set-top box receives the non-abnormity feedback information sent by the server. The non-abnormity feedback information is information sent to the set-top box when the server determines that the response reconnection is not matched with the verification information sent to the corresponding terminal device, and indicates that there is an abnormity in the current set-top box, and the set-top box is controlled to continue maintaining the abnormal state according to the received abnormity feedback information.

For example, when the server determines that the response character string is matched with the verification character string, it indicates that the current user using the set-top box is different from the user corresponding to the user information when the set-top box is registering and logining in, and then it determines that there is no abnormity in the set-top box at present. The server generates the corresponding non-abnormity feedback information according to the determination result, and sends the non-abnormity feedback information to the set-top box. After receiving the non-abnormity feedback information, the set-top box displays corresponding prompt information on the display screen of the television set connected to the set-top box to remind the user of a validation success, and the set-top box is released from the abnormal state, such that the set-top box can be normally used by the user.

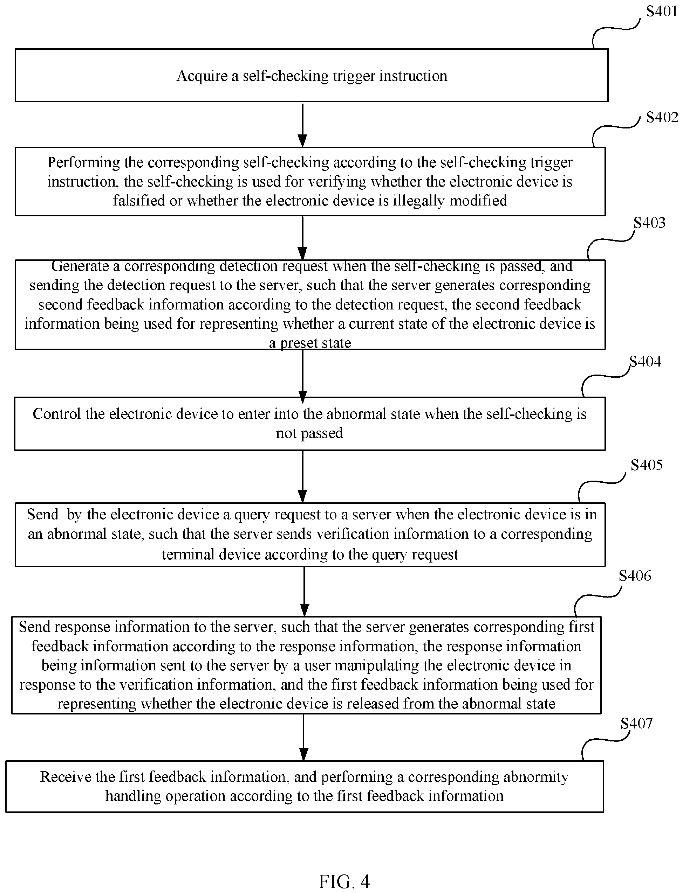

Referring to FIG. 4, in some embodiments, the method for processing an abnormal state includes steps S401 to S407.

At S401, a self-checking trigger instruction is acquired.

The self-checking trigger instruction may be generated when a set-top box is powered on and started for the first time, or may alternatively be generated every time the set-top box is powered on and started, or may alternatively be generated by a server and sent to the set-top box, which is not limited herein. The set-top box acquires the self-checking trigger instruction to perform a corresponding self-checking.

At S402, according to the self-checking trigger instruction, the corresponding self-checking is performed. The self-checking is used for verifying whether the electronic device is in a legal state.

The legal state is used for determining whether the electronic device is falsified or whether the electronic device is illegally modified. After acquiring the self-checking trigger instruction, the set-top box performs a self-checking by detecting whether there is an abnormity in its own identity information.

In some embodiments, according to the self-checking trigger instruction, performing the corresponding self-checking includes: acquiring a detection code of the electronic device according to the self-checking trigger instruction; and determining whether the detection code is matched with a preset detection code. When the detection code is matched with the preset detection code, the self-checking is passed; and when the detection code is not matched with the preset detection code, the self-checking is not passed.

During producing and manufacturing the set-top box, an encrypted detection code is burned in a storage area of the set-top box. The encrypted detection code is encrypted identity information of the set-top box, and a corresponding detection code is acquired by decrypting the encrypted detection code. A preset detection code is further stored in the storage area of the set-top box, and the preset detection code is unencrypted identity information of the set-top box. The identity information includes, but is not limited to, ID of the set-top box, an MAC address, a market code, an operator, and the combination thereof. By determining whether the detection code is matched with the preset detection code, whether the set-top box passes the self-checking is determined. For example, when it determines that the detection code is not matched with the preset detection code, it indicates that the information of the set-top box is falsified, or the set-top box is illegally modified, and the set-top box does not pass the self-checking. When it determines that the detection code is matched with the preset detection code, the set-top box passes the self-checking.

At S403, when the self-checking is passed, a corresponding detection request is generated, and is sent to the server, such that the server generates corresponding second feedback information according to the detection request. The second feedback information is used for representing whether a current state of the electronic device is a preset state.

After the self-checking is passed, the set-top box sends a corresponding detection request to the server, and the server further detects the set-top box according to the detection request to detect whether the cross-boundary selling occurs in the set-top box. The server detects whether the current state of the corresponding set-top box is the preset state according to the detection request. The preset state includes, but is not limited, a non-cross-boundary selling state. The server generates the corresponding second feedback information according to a detection result of the current state of the set-top box.

For example, the server acquires the detection code of the corresponding set-top box according to the detection request. The detection request may include the detection code of the set-top box. The server obtains the detection code of the corresponding set-top box by parsing the detection request; or the server, in response to the detection request, may send a detection code reporting instruction to the set-top box, such that the set-top box sends the corresponding detection code to the server according to the detection code reporting instruction.

The detection code includes, but is not limited to, ID of the set-top box, an MAC address, a market code, operator information, and the combination thereof.

After obtaining the detection code, the server detects whether the current state of the set-top box is the preset state according to the detection code, and generates the corresponding second feedback information. The server has a detection code database for storing the known detection codes of all the current runnable set-top boxes. After obtaining the detection code of the set-top box to be detected, the server queries whether there is a detection code in the known detection codes in the detection code database consistent with the detection code of the set-top box to be detected, and the server generates the corresponding second feedback information according to a query result.

In some embodiments, the method further includes: receiving the second feedback information; and when the current state of the electronic device is learned to be a non-preset state according to the feedback information, controlling the electronic device to enter into an abnormal state.

The set-top box receives the second feedback information sent by the server. When the second feedback information represents that the current state of the set-top box is the non-preset state, it indicates that the current state of the set-top box is a cross-boundary selling state, and the set-top box is controlled to enter into the abnormal state according to the second feedback information, such that the set-top box in the cross-boundary selling state cannot be normally used.

For example, if there is a detection code, consistent with the detection code of the set-top box to be detected, in the known detection codes in the detection code database of the server, the current state of the set-top box to be detected is the cross-boundary selling state, that is, the set-top box to be detected is in the non-preset state. Then, the server generates the corresponding second feedback information representing that the current state of the set-top box is the non-preset state, and sends the second feedback information to the set-top box, such that the set-top box is controlled to enter into the abnormal state according to the second feedback information.

At S404, when the self-checking is not passed, the electronic device is controlled to enter into the abnormal state.

When the set-top box does not pass the self-checking, it indicates that information of the set-top box is falsified, or the set-top box is illegally modified, and then the set-top box enters into the abnormal state, such that the set-top box in the abnormal state cannot be normally used.

At S405, a query request is sent to the server when the electronic device is in the abnormal state, such that the server, in response to the query request, acquires user information bound to the electronic device, so as to send verification information to a corresponding terminal device according to the user information.

Step S405 is the same as step S301 in FIG. 3, which is not described in detail herein.

At S406, response information is sent to the server, such that the server generates corresponding first feedback information according to the response information. The response information is information sent to the server by the user manipulating the electronic device in response to the verification information, and the first feedback information is used for representing whether the electronic device is released from the abnormal state.

Step S406 is the same as step S302 in FIG. 3, which is not described in detail herein.

At S407, the first feedback information is received, and a corresponding abnormity handling operation is performed according to the first feedback information.

Step S407 is the same as step S303 in FIG. 3, which is not described in detail herein.

Whether the information of the electronic device is falsified or whether the electronic device is illegally modified is determined by the self-checking of the electronic device. If the self-checking is not passed, the electronic device is controlled to enter into the abnormal state; and if the self-checking is passed, the server further detects the electronic device to determine whether the electronic device is in the preset state. If the electronic device is in the non-preset state, the electronic device is controlled to enter into the abnormal state. The electronic device in the abnormal state cannot be normally used, for example, the electronic device in the cross-boundary selling state is disabled, such that benefits of a manufacturer and a consumer are guaranteed. At the same time, the electronic device in the abnormal state is verified by the server whether the current user using the electronic device is consistent with the user corresponding to the user information bound to the electronic device, thereby determining whether the electronic device may be released from the abnormal state and enter into a normal use state, which avoids off-line repairing the electronic device in the cross-boundary selling state and saves repairing resources.

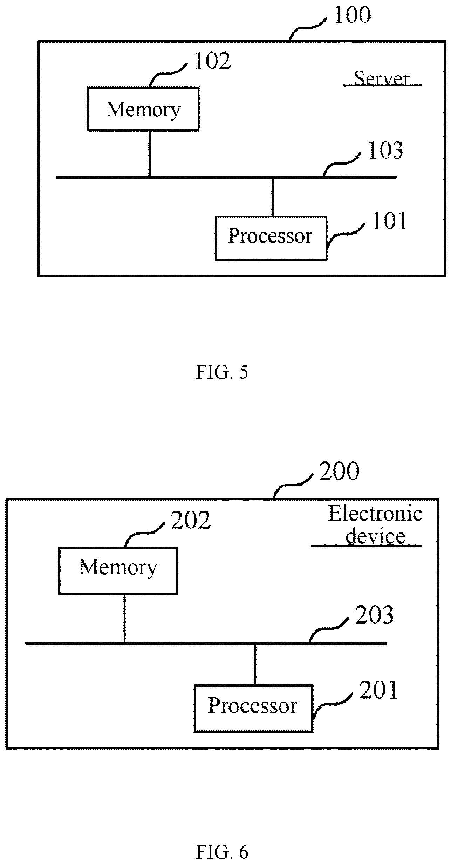

Referring to FIG. 5, it is a schematic structural block diagram of a server provided in an embodiment of the present disclosure.

As shown in FIG. 5, the server 100 specifically includes a processor 101 and a memory 102. The processor 101 and the memory 102 are connected to each other via a bus 103 which is, for example, an inter-integrated circuit (I2C) bus.

For example, the processor 101 is configured to provide computing and control to support running of the entire server. The processor 101 may be a central processing unit (CPU), and may alternatively be a general-purpose processor, a digital signal processor (DSP), an application specific integrated circuit (ASIC), a field-programmable gate array (FPGA) or other programmable logic devices, discrete gates or transistor logic devices, discrete hardware components, etc. The general-purpose processor may be a microprocessor, or may be any conventional processor, etc.

For example, the memory 102 may be a Flash chip, a read-only memory (ROM) disc, an optical disc, a USB flash disk, a mobile hard disk, or the like.

It should be understood by a person skilled in the art that, the structures shown in FIG. 5 are merely parts of the structures relevant to the solution of the embodiment of the present disclosure, and constitute no limitation on the server where the solution of the embodiment of the present disclosure is applied. A specific server may include more or fewer components than those shown in the figure, or combine some components, or have a different component deployment.

In an embodiment, the processor 101 is configured to execute a computer program stored in the memory 102 for implement the following when executing the computer program: receiving a query request sent by an electronic device, the query request being an information request sent to the server when the electronic device is in an abnormal state; sending verification information to a corresponding terminal device according to the query request; receiving response information of the electronic device in response to the verification information; and generating corresponding first feedback information according to the response information, and sending the first feedback information to the electronic device, such that the electronic device performs a corresponding abnormity handling operation according to the first feedback information, and the first feedback information is used for representing whether the electronic device is released from the abnormal state.

In some embodiments, the sending, by the processor 101, verification information to a corresponding terminal device according to the query request includes: acquiring identity information of the electronic device according to the query request; acquiring user information corresponding to the identity information according to the identity information; and sending the verification information to the corresponding terminal device according to the user information.

In some embodiments, the first feedback information includes abnormity feedback information, and the abnormity feedback information is feedback information generated when the server determines that there is an abnormity in the response information. The sending by the processor 101 the first feedback information to the electronic device such that the electronic device performs a corresponding abnormity handling operation according to the first feedback information includes: sending the abnormity feedback information to the electronic device, such that the electronic device is controlled to maintain the abnormal state according the abnormity feedback information.

In some embodiments, the first feedback information includes non-abnormity feedback information, the non-abnormity feedback information is feedback information generated when the server determines that there is no abnormity in the response information; and the sending by the processor 101 the first feedback information to the electronic device such that the electronic device performs the corresponding abnormity handling operation according to the first feedback information includes: sending the non-abnormity feedback information to the electronic device, such that the electronic device is controlled to be released from the abnormal state according to the non-abnormity feedback information.

In some embodiments, before receiving the query request sent by the electronic device, the processor 101 is further configured to perform: receiving a detection request uploaded by the electronic device, the detection request being a request sent to the server when the electronic device passes self-checking; generating corresponding second feedback information according to the detection request, the second feedback information being used for representing whether a current state of the electronic device is a preset state; and sending the second feedback information to the electronic device, such that the electronic device, when the current state of the electronic device is learned to be a non-preset state according to the second feedback information, is controlled to enter into the abnormal state.

In some embodiments, the generating, by the processor 101, corresponding second feedback information according to the detection request includes: acquiring a detection code corresponding to the detection request according to the detection request; and determining whether the detection code is matched with a detection code in known detection codes in a detection code database, and generating the corresponding second feedback information according to a determination result.

Referring to Fig. 6, it is a schematic structural block diagram of an electronic device provided in an embodiment of the present disclosure.

As shown in FIG. 6, the electronic device 200 specifically includes a processor 201 and a memory 202. The processor 201 and the memory 202 are connected to each other via a bus 203 which is, for example, an inter-integrated circuit (I2C) bus.

For example, the processor 201 is configured to provide computing and control to support running of an entire server. The processor 201 may be a central processing unit (CPU), and may alternatively be a general-purpose processor, a digital signal processor (DSP), an application specific integrated circuit (ASIC), a field-programmable gate array (FPGA) or other programmable logic devices, discrete gates or transistor logic devices, discrete hardware components, etc. The general-purpose processor may be a microprocessor, or may be any conventional processor, etc.

For example, the memory 202 may be a Flash chip, a read-only memory (ROM) disc, an optical disc, a USB flash disk, a mobile hard disk, or the like.

It should be understood by a person skilled in the art that, the structures shown in FIG. 6 are merely parts of the structures relevant to the solution of the embodiment of the present disclosure, and constitute no limitation on the electronic device where the solution of the embodiment of the present disclosure is applied, and the specific electronic device may include more or fewer components than those shown in the figure, or combine some components, or have a different component deployment.

In an embodiment, the processor 201 is configured to execute a computer program stored in the memory 202 and implement the following when executing the computer program: sending a query request to the server when the electronic device is in an abnormal state, such that the server, in response to the query request, acquires user information bound to the electronic device so as to send verification information to a corresponding terminal device according to the user information; sending response information to the server, such that the server generates corresponding first feedback information according to the response information, the response information being information sent to the server by a user manipulating the electronic device in response to the verification information, the first feedback information being used for representing whether the electronic device is released from the abnormal state; and receiving the first feedback information, and performing a corresponding abnormity handling operation according to the first feedback information.

In some embodiments, the first feedback information includes abnormity feedback information, and the abnormity feedback information is feedback information generated when the server determines that there is an abnormity in the response information. The receiving by the processor 201 the first feedback information and performing the corresponding abnormity handling operation according to the first feedback information includes: receiving the abnormity feedback information; and controlling the electronic device to maintain the abnormal state according to the abnormity feedback information.

In some embodiments, the first feedback information includes non-abnormity feedback information, and the non-abnormity feedback information is feedback information generated when the server determines that there is no abnormity in the response information. The receiving, by the processor 201, the first feedback information and performing the corresponding abnormity handling operation according to the first feedback information includes: receiving the non-abnormity feedback information; and controlling the electronic device to be released from the abnormal state according to the non-abnormity feedback information.

In some embodiments, before sending the query request to the server, the processor 201 is further configured to perform: acquiring a self-checking trigger instruction; performing a corresponding self-checking according to the self-checking trigger instruction, the self-checking being used for verifying whether the electronic device is in a legal state; when the self-checking is passed, generating a corresponding detection request, and sending the detection request to the server, such that the server generates corresponding second feedback information according to the detection request, the second feedback information being used for representing whether a current state of the electronic device is a preset state; and when the self-checking is not passed, controlling the electronic device to enter into the abnormal state.

In some embodiments, the performing, by the processor 201, the corresponding self-checking according to the self-checking trigger instruction includes: acquiring a detection code of the electronic device according the self-checking trigger instruction; and determining whether the detection code is matched with a preset detection code. When the detection code is matched with the preset detection code, the self-checking is passed; and when the detection code is not matched with the preset detection code, the self-checking is not passed.

In some embodiments, the processor 201 is further configured to perform: receiving second feedback information; and when the current state of the electronic device is learned to be a non-preset state according to the second feedback information, controlling the electronic device to enter into the abnormal state.

A person of ordinary skill in the art should understand that, all or some steps of the methods disclosed above and functional modules/units of a system or an apparatus may be implemented as software, firmware, hardware, and a proper combination thereof. In an embodiment of hardware, a division of the functional modules/units mentioned above does not necessarily correspond to a division of physical components. For example, one physical component may have multiple functions, or one function or step may be implemented by multiple physical components cooperatively. Some physical components or all physical components may be implemented as software executed by a processor, such as a central processor, a digital signal processor or a microprocessor, or may be implemented as hardware, or may be implemented as an integrated circuit, such as an application-specific integrated circuit. Such software may be distributed on a computer-readable medium, and the computer-readable medium may include a computer storage medium (or non-transient medium) and a communications medium (or transient medium). As is known to a person of ordinary skill in the art, the term, computer storage medium, includes volatile and non-volatile, removable and non-removable mediums that may be implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage apparatus, or any other medium which may be used to store the desired information and accessed by a computer. In addition, as is known to a person of ordinary skill in the art, the communication medium usually includes the computer readable instruction, the data structure, and the program module or other data in a modulated data signal, such as a carrier or other transmission mechanisms, and may include any information delivery medium.

It should be understood that the term, "and/or" used in the description of the present disclosure and the appended claims refers to any combination and all possible combinations of one or more of the associated listed items, and includes such combinations. It should be noted that, in the context, terms "include", "comprise", or any other variants thereof are intended to cover a non-exclusive inclusion, so that processes, methods, objects or systems including a series of elements include not only those elements, but also other elements that are not expressly enumerated, or elements inherent to such processes, methods, objects or systems. Without more limitations, elements defined by the sentence "including a ..." do not exclude that there are still other same elements in the processes, methods, objects or systems including the elements.

The serial numbers of the foregoing embodiments of the present disclosure are merely for the purpose of description but do not imply the preference among the embodiments. The above are only specific embodiments of the present disclosure, and the scope of protection of the present disclosure is not limited thereto, and any person skilled in the art may easily concept of various equivalent modifications or replacements within the technical scope of the present disclosure, which shall be covered by the scope of protection of the present disclosure. Therefore, the scope of protection of the present disclosure shall be subject to the scope of protection of the claims.

## Claims

1. A method for processing an abnormal state, comprising:
receiving a query request sent by an electronic device, the query request being an information request sent to a server in a case where the electronic device is in an abnormal state;
sending verification information to a corresponding terminal device according to the query request;
receiving response information of the electronic device in response to the verification information; and
generating corresponding first feedback information according to the response information, and sending the first feedback information to the electronic device, such that the electronic device performs a corresponding abnormity handling operation according to the first feedback information, and the first feedback information is used for representing whether the electronic device is released from the abnormal state.

2. The method according to claim 1, wherein
before the receiving a query request sent by an electronic device, the method further comprises:
receiving a detection request uploaded by the electronic device, the detection request being a request sent to the server in a case where the electronic device passes self-checking;
generating corresponding second feedback information according to the detection request, the second feedback information being used for representing whether a current state of the electronic device is a preset state; and
sending the second feedback information to the electronic device, such that the electronic device, in a case where the current state of the electronic device is learned to be a non-preset state according to the second feedback information, is controlled to enter into the abnormal state.

3. The method according to claim 2, wherein
the generating corresponding second feedback information according to the detection request comprises:
acquiring a detection code corresponding to the detection request according to the detection request; and
determining whether the detection code is matched with a detection code in known detection codes in a detection code database, and generating the corresponding second feedback information according to a determination result.

4. The method according to claim 1, wherein
the sending verification information to a corresponding terminal device according to the query request comprising:
acquiring identity information of the electronic device according to the query request;
acquiring user information corresponding to the identity information according to the identity information; and
sending the verification information to the corresponding terminal device according to the user information.

5. The method according to claim 1, wherein
the first feedback information comprises abnormity feedback information, and the abnormity feedback information is feedback information generated in a case where the server determines that there is an abnormity in the response information, and
the sending the first feedback information to the electronic device such that the electronic device performs a corresponding abnormity handling operation according to the first feedback information comprises: sending the abnormity feedback information to the electronic device, such that the electronic device is controlled to maintain the abnormal state according to the abnormity feedback information.

6. The method according to claim 1, wherein
the first feedback information comprises non-abnormity feedback information, and the non-abnormity feedback information is feedback information generated in a case where the server determines that there is no abnormity in the response information, and
the sending the first feedback information to the electronic device such that the electronic device performs a corresponding abnormity handling operation according to the first feedback information comprises: sending the non-abnormity feedback information to the electronic device, such that the electronic device is controlled to be released from the abnormal state according to the non-abnormity feedback information.

7. A method for processing an abnormal state, comprising:
sending a query request to a server in a case where an electronic device is in an abnormal state, such that the server sends verification information to a corresponding terminal device;
sending response information to the server, such that the server generates corresponding first feedback information according to the response information, the response information being information sent to the server by a user manipulating the electronic device in response to the verification information, and the first feedback information being used for representing whether the electronic device is released from the abnormal state; and
receiving the first feedback information, and performing a corresponding abnormity handling operation according to the first feedback information.

8. The method according to claim 7, wherein
before sending a query request to a server, the method further comprises:
acquiring a self-checking trigger instruction;
performing a corresponding self-checking according to the self-checking trigger instruction, the self-checking operation being used for verifying whether the electronic device is in a legal state;
generating a corresponding detection request in a case where the self-checking is passed, and sending the detection request to the server, such that the server generates corresponding second feedback information according to the detection request, the second feedback information being used for representing whether a current state of the electronic device is a preset state; and
controlling the electronic device to enter into the abnormal state in a case where the self-checking is not passed.

9. The method according to claim 8, wherein
the performing a corresponding self-checking according to the self-checking trigger instruction comprises:
acquiring a detection code of the electronic device according to the self-checking trigger instruction; and
determining whether the detection code is matched with a preset detection code, wherein in a case where the detection code is matched with the preset detection code, the self-checking is passed; and in a case where the detection code is not matched with the preset detection code, the self-checking is not passed.

10. The method according to claim 8, further comprising:
receiving the second feedback information; and
controlling the electronic device to enter into the abnormal state in a case where the current state of the electronic device is learned to be a non-preset state according to the second feedback information.

11. The method according to claim 7, wherein
the first feedback information comprises abnormity feedback information, and the abnormity feedback information is feedback information generated in a case where the server determines that there is an abnormity in the response information, and
the receiving the first feedback information and performing a corresponding abnormity handling operation according to the first feedback information comprises: receiving the abnormity feedback information; and
controlling the electronic device to maintain the abnormal state according to the abnormity feedback information.

12. The method according to claim 7, wherein
the first feedback information comprises non-abnormity feedback information, and the abnormity feedback information is feedback information generated in a case where the server determines that there is no abnormity in the response information, and
the receiving the first feedback information and performing a corresponding abnormity handling operation according to the first feedback information comprises:
receiving the non-abnormity feedback information; and
controlling the electronic device to be released from the abnormal state according to the non-abnormity feedback information.

13. A server, comprising: a memory and a processor, wherein
the memory is configured to store a computer executable program, and the processor is configured to execute the computer executable program to implement the method for processing an abnormal state according to any one of claims 1 to 6.

14. An electronic device, comprising: a memory and a processor, wherein
the memory is configured to store a computer executable program, and the processor is configured to execute the computer executable program to implement the method for processing an abnormal state according to any one of claims 7 to 12.
